# EUROPEAN PATENT APPLICATION

(11) **EP 1 734 734 A1**
(43) Date of publication of application: **20.12.2006**
(21) Application number: 06012133.2
(22) Date of filing: 13.06.2006
(51) Int. Cl.: H04N 1/32

(54) **Multifunction apparatus to obtain user's authentication information and address book from an external medium**

(30) Priority: 13.06.2005 JP 2005172212
(71) Applicant: Ricoh Company, Ltd., Tokyo 143-8555 (JP)
(72) Inventor: Nakamura, Rie, Tokyo (JP); Asakawa, Tetsuo, Ohta-ku, Tokyo (JP); Kouchi, Miki, Kawasaki-shi, Kanagawa (JP); Kakoi, Akihiro, Yokohama-shi, Kanagawa (JP); Furuichi, Yoshinori, Yokohama-shi, Kanagawa (JP); Yano, Tomoaki, Yokohama-shi, Kanagawa (JP)
(74) Representative: Muschke, Markus Artur Heinz

(57) **Abstract**

An image communication apparatus is disclosed. The image communication apparatus includes an image forming unit for forming image information, an image communication unit for transmitting the image information, and a removable media access unit for accessing information stored in a removable medium as an external storage medium loaded therein. If the removable medium is loaded in the removable media access unit, user authentication is performed and, if successful, the removable media access unit reads destination information and additional image information stored in the removable medium, and the image communication unit transmits the image information along with the additional image information according to the destination information.

## Description

### BACKGROUND OF THE INVENTION

### 1. Field of the Invention

The present invention relates to an image communication apparatus having an image forming function, an image communication function, and a removable media access unit for accessing information stored in a removable medium as an external storage medium loaded therein.

### 2. Description of the Related Art

There have been multifunction machines with scanner, printer, and facsimile functions (i.e. image forming and image communication functions) and facsimile machines that have address book functions. These machines store address information in memory units thereof. The machines select, in response to entry of a destination keyword by a user, a telephone number of the destination and perform facsimile transmission.

However, to use this function, the address information needs to be registered in each machine one by one.

Japanese Patent Laid-Open publication No. 2002-41250 discloses a technique for easily transmitting a personal address book (telephone numbers, e-mail addresses, etc.) stored in a personal computer to a machine via a network for the purpose of reducing the burden on users.

This technique, however, dose not make any changes to the fact that address information is stored in memory units of multifunction machines and facsimile machines. Since the memory capacity of these machines is limited, if many users send their personal address book data to the machines so as to store the data in the memory units of the machines, the size of the data might exceed the memory capacity.

### SUMMARY OF THE INVENTION

The present invention solves at least one of the above problems. The present invention is directed to an image communication apparatus that can use personal address book information with ease while avoiding storing address information in a memory unit thereof to the level where memory shortage problem may occur.

According to an aspect of the present invention, there is provided an image communication apparatus that comprises an image forming unit for forming image information, an image communication unit for transmitting the image information, and a removable media access unit for accessing information stored in a removable medium as an external storage medium loaded therein, wherein, if the removable medium is loaded in the removable media access unit, the removable media access unit reads destination information stored in the removable medium, and the image communication unit transmits the image information according to the destination information.

According to another aspect of the present invention, there is provided an image communication apparatus that comprises an image forming unit for forming image information, an image communication unit for transmitting the image information, and a removable media access unit for accessing information stored in a removable medium as an external storage medium loaded therein, wherein, if the removable medium is loaded in the removable media access unit, the removable media access unit reads additional image information stored in the removable medium, and the image communication unit transmits the image information along with the additional image information.

According to still another aspect of the present invention, there is provided an image communication apparatus that comprises an image forming unit for forming image information, an image communication unit for transmitting the image information, and a removable media access unit for accessing information stored in a removable medium as an external storage medium loaded therein, wherein, if the removable medium is loaded in the removable media access unit, the removable media access unit reads person authentication information stored in the removable medium such that user authentication is performed using the person authentication information, and wherein, if the user authentication is successful, the removable media access unit reads destination information stored in the removable medium, and the image communication unit transmits the image information according to the destination information.

According to a further aspect of the present invention, there is provided an image communication apparatus that comprises an image forming unit for forming image information, an image communication unit for transmitting the image information, and a removable media access unit for accessing information stored in a removable medium as an external storage medium loaded therein, wherein, if the removable medium is loaded in the removable media access unit, the removable media access unit reads person authentication information stored in the removable medium such that user authentication is performed using the person authentication information, and wherein, if the user authentication is successful, the removable media access unit reads additional image information stored in the removable medium, and the image communication unit transmits the image information along with the additional image information.

According to another further aspect of the present invention, there is provided an image communication apparatus that comprises an image forming unit for forming image information, an image communication unit for transmitting the image information, and a removable media access unit for accessing information stored in a removable medium as an external storage medium loaded therein, wherein, if the removable medium is loaded in the removable media access unit, the removable media access unit reads person authentication information stored in the removable medium such that user authentication is performed using the person authentication information, and wherein, if the user authentication is successful, the removable media access unit reads destination information and additional image information stored in the removable medium, and the image communication unit transmits the image information along with the additional image information according to the destination information.

In one embodiment of the present invention, personal address book information is read from a removable medium, and the read personal address book information is used for a transmission operation. Accordingly, the personal address book information can be easily used even if the address book information is not stored in a memory unit of an image communication apparatus.

### BRIEF DESCRIPTION OF THE DRAWINGS

FIG. 1 is a block diagram showing a configuration example of a multifunction machine according to an embodiment of the present invention;
FIG. 2 is a schematic diagram showing an example of information stored in a removable medium;
FIG. 3 is a schematic view showing an example of an operations/display unit;
FIG. 4 schematically shows an example of a screen displaying content of an external address book used for selecting a destination;
FIG. 5 is a schematic diagram showing an example of a document to be transmitted with a cover page attached thereto;
FIG. 6 shows an example of a screen for prompting entry of a PIN number for user authentication;
FIG. 7 is a flowchart showing an example of a process for reading an address book table from a removable medium and providing the read address book table to a user;
FIG. 8 is a flowchart showing an example of a process for reading cover page information from a removable medium and performing a transmission operation; and
FIG. 9 is a flowchart showing an example of a process for performing a facsimile transmission operation in the case where a removable medium is loaded.

### DETAILED DESCRIPTION OF THE PREFERRED EMBODIMENT

The following describes preferred embodiments of the present invention with reference to the attached drawings.

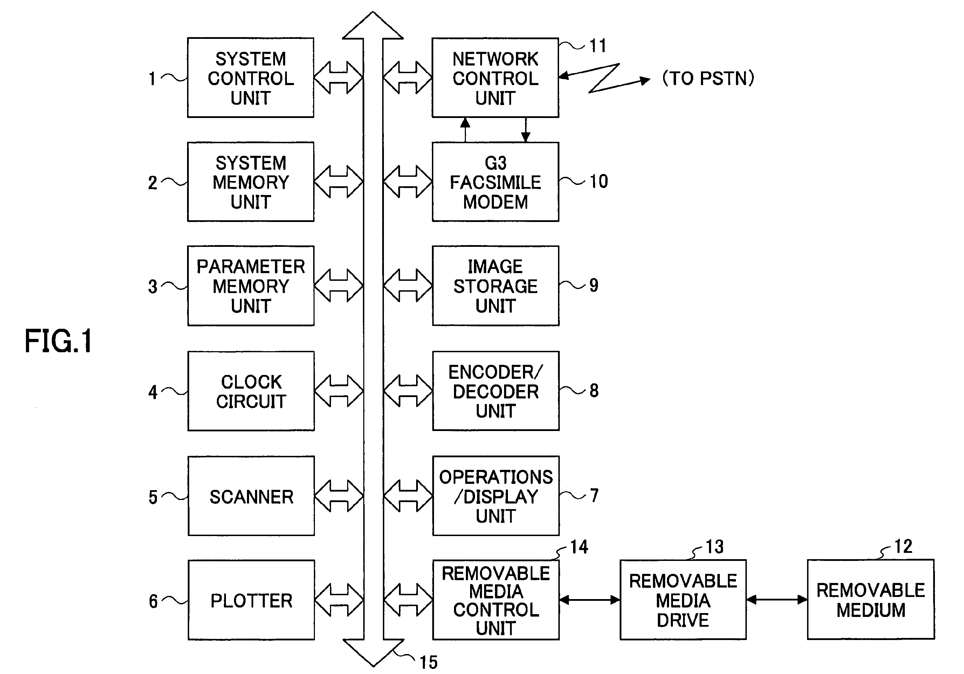

FIG. 1 is a block diagram showing a configuration example of a multifunction machine according to an embodiment of the present invention. This multifunction machine has a facsimile function, a scanner function, and a copier function, and can use removable media as external storage media.

Referring to FIG. 1, a system control unit 1 performs various control operations such as operations for controlling the components of the multifunction machine, scanner function control operations, copier function control operations, and facsimile transmission control operations. A system memory unit 2 stores various data necessary for executing processing programs, and also serves as a work area for the system control unit 1. A parameter memory unit 3 stores various types of information specific to the multifunction machine. A clock circuit 4 outputs current time information.

A scanner 5 scans document images at a predetermined resolution. A plotter 6 draws images at a predetermined resolution. An operations/display unit 7 is used for operating the multifunction machine and includes various operation keys and various displays.

An encoder/decoder unit 8 encodes and compresses image signals and decodes encoded and compressed image information to the original image signals. An image storage unit 9 can store many pieces of encoded and compressed image information.

A Group 3 facsimile modem 10 provides Group 3 facsimile modem functions such as low-speed modem functions (V.21 modem) for transmitting and receiving transmission procedure signals and high-speed modem functions (V.17 modem, V.34 modem, V.29 modem, V. 27ter modem, etc.) for transmitting and receiving image information.

A network control unit 11 is provided for connecting the multifunction machine to an analog PSTN (Public Switched Telephone Network) and has functions for automatically originating and receiving calls.

A removable medium 12 may be an optical storage medium such as a CD and a DVD, or may be a memory card medium such as various types of memory cards. A removable media drive 13 accesses data stored in the removable medium 12 (i.e., reads data from and writes data into the removable medium 12). A removable media control unit 14 controls operations of the removable media drive 13.

It is preferable that the removable media drive 13 and the removable media control unit 14 can support different types of memory card media produced by different manufactures based on their own standards.

An internal bus 15 interconnects the system control unit 1, the system memory unit 2, the parameter memory unit 3, the clock circuit 4, the scanner 5, the plotter 6, the operations/display unit 7, the encoder/decoder unit 8, the image storage unit 9, the Group 3 facsimile modem 10, the network control unit 11, and the removable media control unit 14 such that these units transmit data to and receive data from each other via the internal bus 15.

It is to be noted that in the illustrated embodiment the network control unit 11 and the Group 3 facsimile modem 10 transmit data directly to and receive data directly from each other.

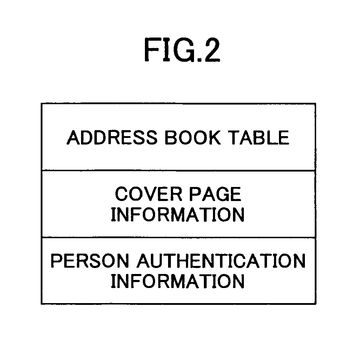

The removable medium 12 stores various types of information, which may include, for example, user-specific information. For example, referring to FIG. 2, among the information that may be stored in a removable medium 12 are an address book table in which one or more destination information items are registered, cover page information as additional information to be added as a cover page to the first page of a document to be transmitted, and person authentication information used for user authentication.

Other types of information such as, e.g., image data read by the scanner 5 of the multifunction machine may also be stored in the removable medium 12.

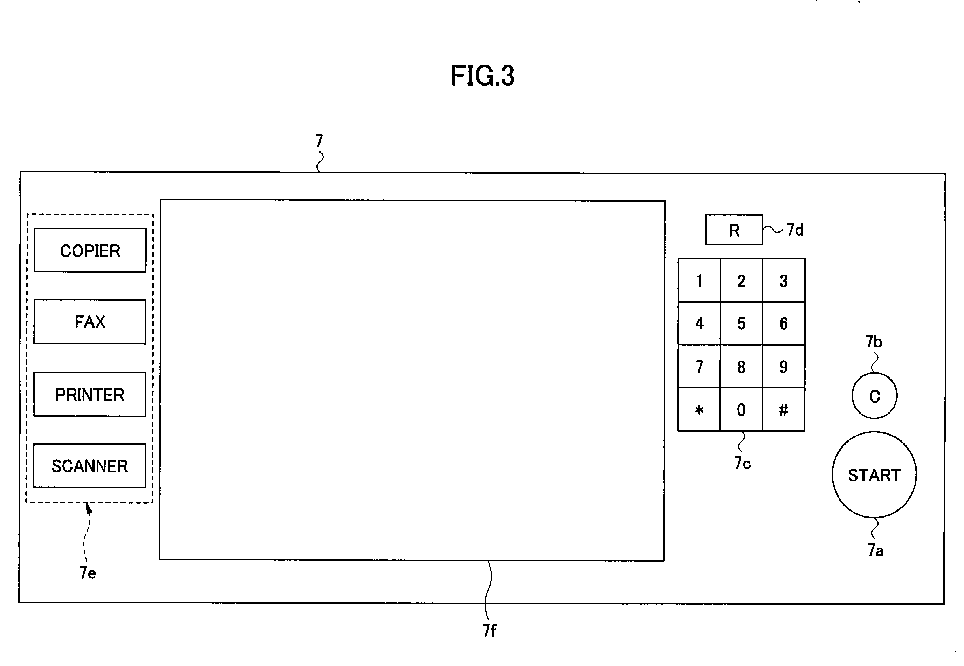

FIG. 3 is a schematic view showing an example of the operations/display unit 7.

With reference to FIG. 3, a start key 7a is used for entering commands for starting various operations of the multifunction machine. A cancel key 7b is used for entering commands for canceling operations of the multifunction machine. A numeric keypad 7c is used for entering numbers such as telephone numbers. A reset key 7d is used for resetting numbers entered by the numeric keypad 7c.

Application keys 7e are used for selecting functions of the multifunction machine. A liquid crystal display 7f displays various messages such as guidance for operating the multifunction machine and feedbacks to entered information, and includes a touch panel (not shown) as an on-screen soft keyboard.

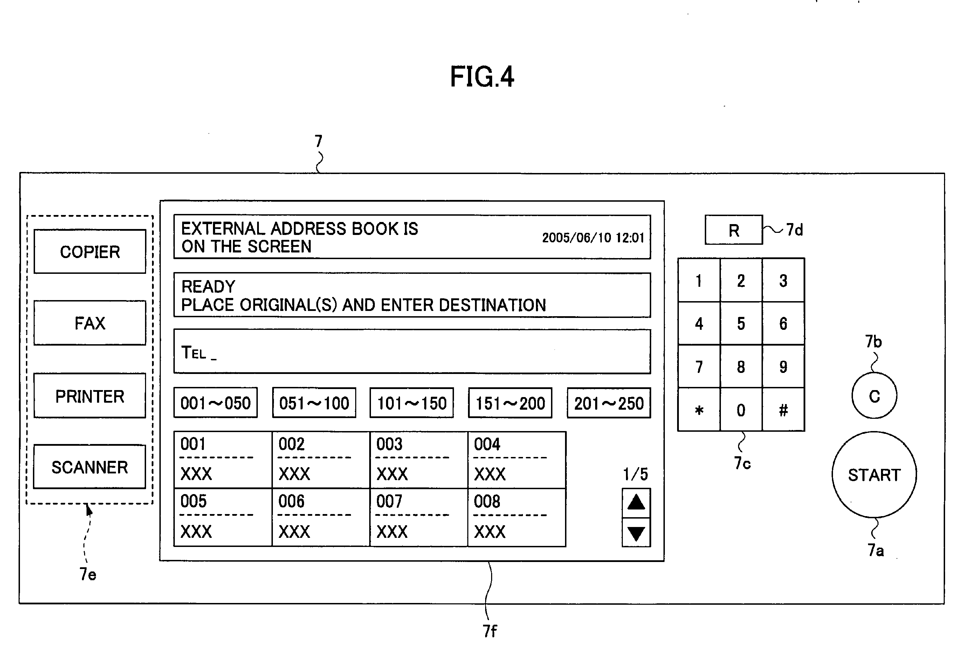

In one embodiment, if the removable medium 12 is loaded in the removable media drive 13 and if the facsimile function is selected by a user, the address book table stored in the removable medium 12 is read. Then, for example, an operations screen as shown in FIG. 4 is displayed such that the user can specify a destination utilizing the content of the address book table stored in the removable medium 12.

Since a destination can be specified utilizing the address book table stored in the removable medium 12, if personal address books information is registered in the address book table, user convenience is enhanced.

Moreover, since the multifunction machine does not need to store address book tables for individual users, the production cost of the multifunction machine can be reduced.

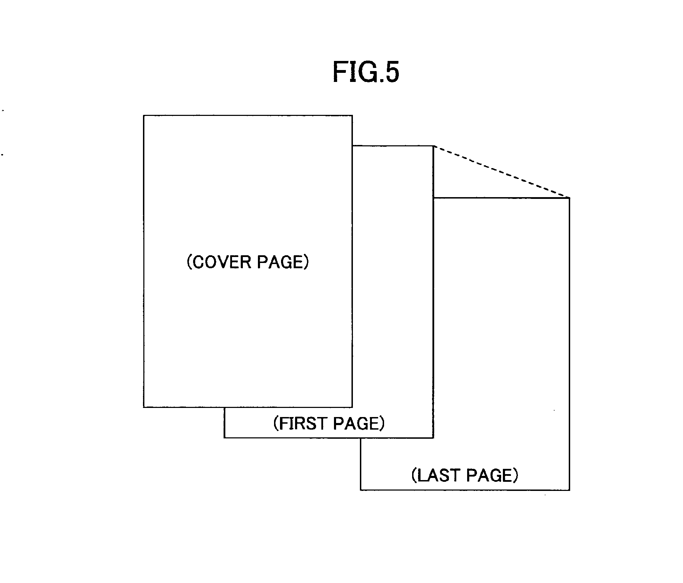

In another embodiment, if the removable medium 12 is loaded in the removable media drive 13 and if the facsimile function is selected by a user, the cover page information stored in the removable medium 12 is read and transmitted as a cover page of a document to be transmitted as shown in FIG. 5, for example.

In this way, the cover page information stored in the removable medium 12 can be used as a cover page. The cover page information may include user-specific information such as sender information and destination information according to user preferences so as to enhance user convenience.

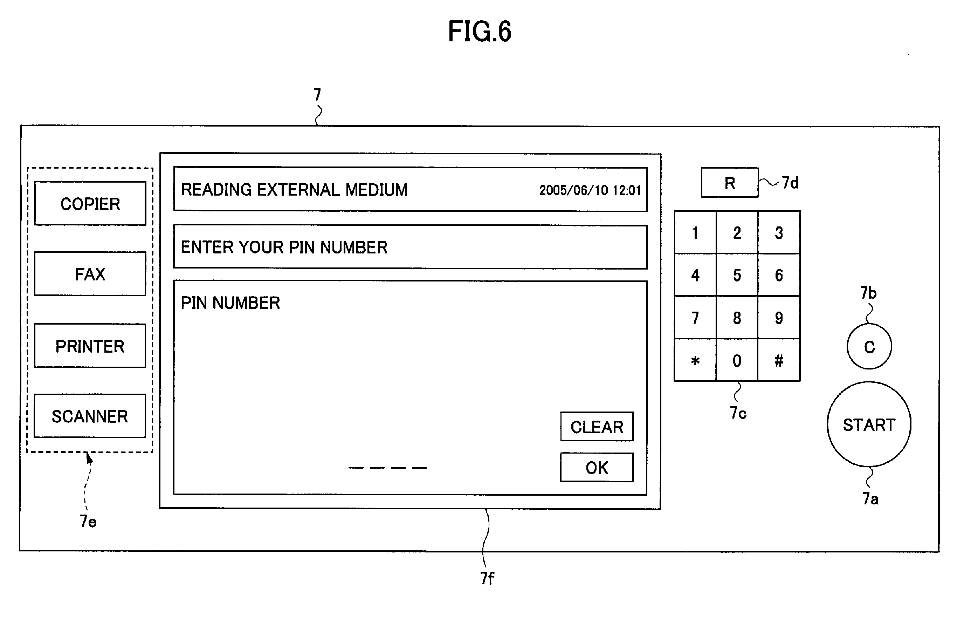

In still another embodiment, if the removable medium 12 is loaded in the removable media drive 13, the person authentication information stored in the removable medium 12 is read. Then, for example, an authentication request screen as shown in FIG. 6 is displayed for prompting a user to enter his/her PIN number. The pin number entered by the user is checked against the person authentication information, thereby performing user authentication.

Since the user authentication is performed utilizing the person authentication information stored in the removable medium 12, the multifunction machine does not need to store the person authentication information therein. Accordingly, the production cost of the multifunction machine can be reduced.

It is to be noted that the person authentication information is not limited to PIN numbers but may include biometrics authentication information. If person authentication using biometrics authentication information such as fingerprints, voiceprints, or iris is applied, a sensor for detecting fingerprints, voiceprints, or iris needs to be provided. Person authentication using an RFID may also be applicable. In the case of person authentication using an RFID, an ID detected from the RFID is checked against an ID stored in advance in the removable medium 12 as user authentication information.

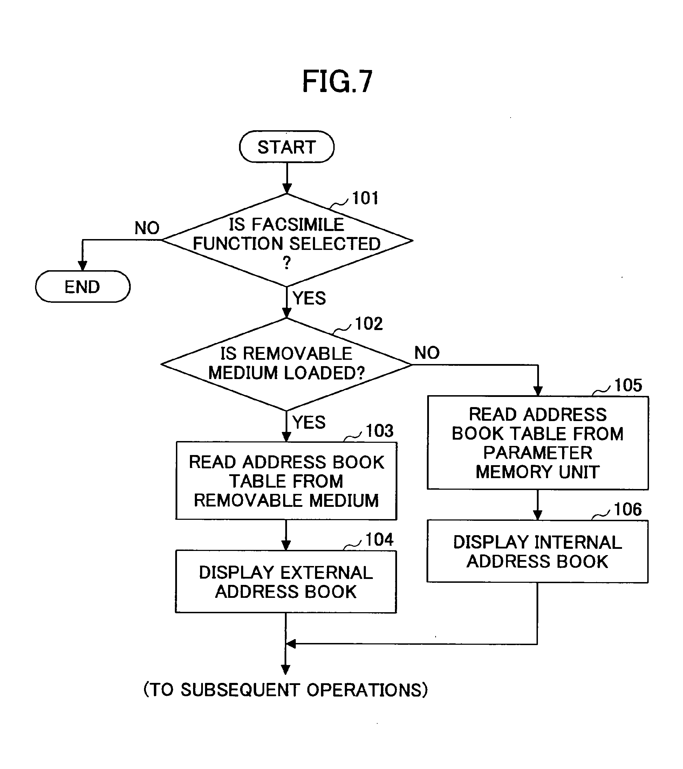

FIG. 7 is a flowchart showing an example of a process for reading the address book table from the removable medium 12 and providing the read address book table to a user.

If the facsimile function is selected as a machine function (Yes in Step 101) and if the removable medium 12 is loaded (Yes in Step 102), the address book table is read from the removable medium 12 (Step 103). The content of the read address book table is displayed as an external address book (Step 104). Then, subsequent operations are performed.

If the removable medium 12 is not loaded (No in Step 102), an address book table (not shown) stored in the parameter memory unit 3 is read (Step 105). The content of the read address book table is displayed as an internal address book (Step 106). Then, subsequent operations are performed.

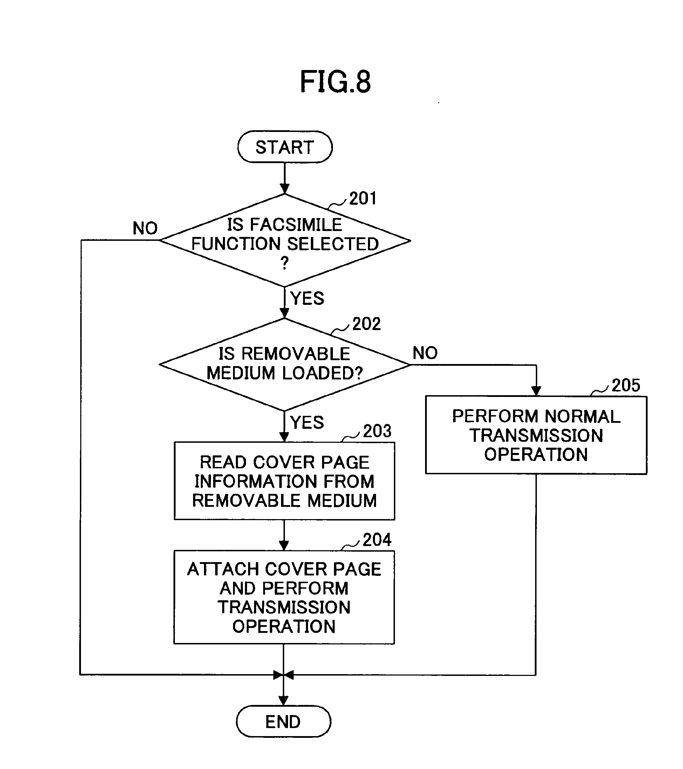

FIG. 8 is a flowchart showing an example of a process for reading the cover page information from the removable medium 12 and transmitting the read cover page information.

If the facsimile function is selected as a machine function (Yes in Step 201) and if the removable medium 12 is loaded (Yes in Step 202), the cover page information is read from the removable medium 12 (Step 203). The read cover page information is added as a cover page to the first page of image information to be transmitted, and then a transmission operation is performed (Step 204).

If the removable medium 12 is not loaded (No in Step 202), a normal transmission operation is performed (Step 205).

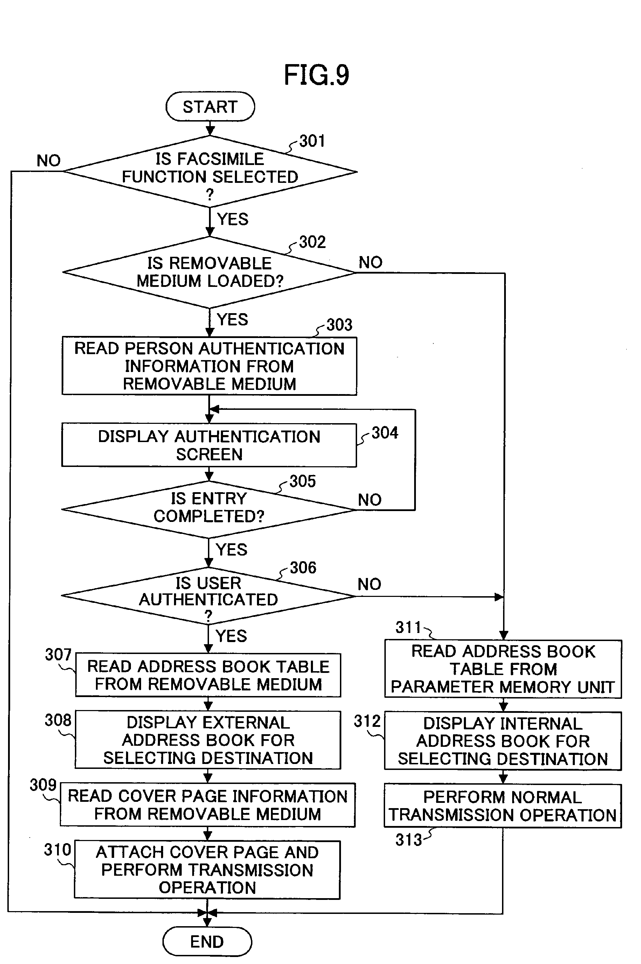

FIG. 9 is a flowchart showing another example of a process for performing a facsimile transmission operation in the case where the removable medium 12 is loaded.

If the facsimile function is selected as a machine function (Yes in Step 301) and if the removable medium 12 is loaded (Yes in Step 302), the person authentication information is read from the removable medium 12 (Step 303). Then, the authentication screen is displayed (Step 304). If person authentication information such as a PIN number is not entered by a user (No in Step 305), the authentication screen continues to be displayed.

If the PIN number is entered (Yes in Step 305), the entered PIN number is checked against a PIN number contained in the person authentication information to determine whether the user is authenticated (Step 306).

If the user is authenticated (Yes in Step 306), the address book table is read from the removable medium 12 (Step 307). The content of the read address book table is displayed as an external address book such that the user selects a destination (Step 308).

Then, the cover page information is read from the removable medium 12 (Step 309). The read cover page information is added as a cover page to the first page of image information to be transmitted, and a transmission operation to the destination selected in Step 308 is performed (Step 310).

If the user is not authenticated (No in Step 306), an address book table (not shown) stored in the parameter memory unit 3 is read (Step 311). The content of the read address book table is displayed as an internal address book such that the user selects a destination (Step 312).

Then, a transmission operation to the destination selected in Step 312 is performed (Step 313).

Although a facsimile communication function is provided as a communication function in the above-described embodiments, the present invention is also applicable in the case where, for example, a scan-to-Email function is provided as a communication function.

The present invention is not limited to the above-described embodiments, and is applicable to other machines having image communication functions.

## Claims

1. An image communication apparatus
**characterized by**:
an image forming unit for forming image information;
an image communication unit for transmitting the image information; and
a removable media access unit for accessing information stored in a removable medium as an external storage medium loaded therein;
wherein, if the removable medium is loaded in the removable media access unit, the removable media access unit reads destination information stored in the removable medium, and the image communication unit transmits the image information according to the destination information.

2. An image communication apparatus
**characterized by**:
an image forming unit for forming image information;
an image communication unit for transmitting the image information; and
a removable media access unit for accessing information stored in a removable medium as an external storage medium loaded therein;
wherein, if the removable medium is loaded in the removable media access unit, the removable media access unit reads additional image information stored in the removable medium, and the image communication unit transmits the image information along with the additional image information.

3. An image communication apparatus
**characterized by**:
an image forming unit for forming image information;
an image communication unit for transmitting the image information; and
a removable media access unit for accessing information stored in a removable medium as an external storage medium loaded therein;
wherein, if the removable medium is loaded in the removable media access unit, the removable media access unit reads person authentication information stored in the removable medium such that user authentication is performed using the person authentication information, and
if the user authentication is successful, the removable media access unit reads destination information stored in the removable medium, and the image communication unit transmits the image information according to the destination information.

4. An image communication apparatus
**characterized by**:
an image forming unit for forming image information;
an image communication unit for transmitting the image information; and
a removable media access unit for accessing information stored in a removable medium as an external storage medium loaded therein;
wherein, if the removable medium is loaded in the removable media access unit, the removable media access unit reads person authentication information stored in the removable medium such that user authentication is performed using the person authentication information, and
if the user authentication is successful, the removable media access unit reads additional image information stored in the removable medium, and the image communication unit transmits the image information along with the additional image information.

5. An image communication apparatus
**characterized by**:
an image forming unit for forming image information;
an image communication unit for transmitting the image information; and
a removable media access unit for accessing information stored in a removable medium as an external storage medium loaded therein;
wherein, if the removable medium is loaded in the removable media access unit, the removable media access unit reads person authentication information stored in the removable medium such that user authentication is performed using the person authentication information, and
if the user authentication is successful, the removable media access unit reads destination information and additional image information stored in the removable medium, and the image communication unit transmits the image information along with the additional image information according to the destination information.
